# EUROPEAN PATENT APPLICATION

(11) **EP 4 043 721 A1**
(43) Date of publication of application: **17.08.2022**
(21) Application number: 21157010.6
(22) Date of filing: 15.02.2021
(51) Int. Cl.: F03D 13/10, B60P 3/40, B66C 1/10, F03D 13/40

(54) **INSTALLATION SYSTEM AND METHOD OF UPENDING AND INSTALLING A WIND TURBINE TOWER**

(71) Applicant: Siemens Gamesa Renewable Energy A/S, 7330 Brande (DK)
(72) Inventor: FALKENBERG, Peter Loevenskjold, 7400 Herning (DK); KOMMA, Nagaraju, 7430 Ikast (DK); KUSCH, Gert, 8541 Skodstrup (DK); POULSEN, Henning, Skjern (DK); SOENDERUP, Joachim, 5230 Odense (DK); LASHKOV, Ventsi, 8700 Horsens (DK)
(74) Representative: Aspacher, Karl-Georg

(57) **Abstract**

The present invention relates to an installation system for installing a tower of a wind turbine. The present invention further relates to a tower of a wind turbine comprising said installation system. The present invention further relates to a method of upending a tower of a wind turbine using said installation system. The present invention further relates to a method of installing a tower of a wind turbine using said installation system.

## Description

The present invention relates to an installation system for installing a tower of a wind turbine. The present invention further relates to a tower of a wind turbine comprising said installation system. The present invention further relates to a method of upending a tower of a wind turbine using said installation system. The present invention further relates to a method of installing a tower of a wind turbine using said installation system.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor and rotates the shaft, thereby driving the generator to generate electricity.

Wind turbines are in continuous development due to advancements in technology and energy harvesting. Hence, new-generation wind turbines have increased in size compared to older ones. One of the components which has greatly increased in size is the tower, allowing the wind turbine to reach enough height above ground to provide clearance for the turbine blades at an altitude where there are high wind velocities for adequate power generation. This increased length of the tower of wind turbines complicates the installation of the tower at the installation site.

For offshore wind turbines, where the wind energy is harvested offshore, the towers are transported in vessels. Huge, dedicated offshore wind turbine-installing vessels have been developed and built for the purpose. These huge vessels are very expensive to use and may be in low supply. The vessels have cranes used for lifting and upending the tower to install it on the monopile, foundation or transition piece.

For onshore wind turbines, where the wind energy is harvested onshore, the towers are transported with trailers and trucks on the road. The tower is lifted by cranes at the installation site.

Installing a wind turbine can be extremely challenging. Known installation procedures typically involve establishing a support structure such as a lattice structure or a foundation, raising or erecting the tower on the support structure or on the foundation, and subsequently installing the nacelle and blades atop the erect tower. Alternatively, the tower can be installed directly on the ground.

Particularly challenging is the installation of offshore wind turbines because of the heavy equipment and components and the relative movement between the transition piece and the installation vessel. Thus, the costs of installation of offshore wind turbines are higher than the ones of onshore wind turbines. The construction of offshore wind turbines, the delivery of the parts to the installation site and the assembly of these parts requires specialized equipment and this greatly increases the costs of offshore wind turbines.

At present, there are different methods for installing wind turbine towers. One method is to use a tower formed of a plurality of modules or sections which are assembled at the installation site. For this, the tower might comprise a plurality of tower sections to reduce the production and transportation costs, which are then transported separately to the installation site. This method simplifies the transport of the tower but results in a complicated assembly of the parts at the installation site, as accurate hoisting technology is required. Additionally, this method raises health and safety issues, as the workers work under suspended load, and the work time for the installation of the turbine increases. For the installation of offshore wind turbines and due to the harsh weather conditions in deep sea waters, the installation of the multiple modules or sections entails higher risks. On the one side, this leads to a higher weather exposure of the open parts during installation. On the other side, the complexity of this method increases the costs of installation due to the high costs of operation of the vessels used.

Another method suited for tower transportation is to preassemble the tower and transport it to the installation site. Under preassembled tower it is meant a tower which is already assembled from a plurality of tower sections or similar components and which is transported as one piece, instead of transporting the tower sections or components separately or jointly as separate pieces. The tower can be preassembled at the manufacturing site and then be transported to the installation site. For the case of offshore wind turbines and to avoid the complexity of assembling multiple tower sections using a vessel in the installation site, the tower sections can also be preassembled at the harbor prior to sea transport on the vessel.

For the transport and installation of preassembled towers, other documents are known. The preassembled tower can be transported either vertically or horizontally.

By horizontal transport it is meant that the longitudinal axis of the tower of the wind turbine is transported substantially horizontally. EP 3 715 628 A1 discloses a ship that transports preassembled wind turbines in a horizontal arrangement.

Similarly, by vertical transport it is meant that the longitudinal axis of the tower of the wind turbine is transported substantially vertically. EP 2 641 825 A1 discloses a ship which transports preassembled wind turbines in a vertical arrangement and installs the wind turbines in the installation site by means of a handling device, which grips and lifts the tower of the wind turbine, moving the wind turbine to a position above the foundation.

WO 2020 067 904 A1 discloses a method of installing an offshore wind turbine, in which a container contains the tower and other functional parts of the wind turbine, the wind turbine being installed by raising the tower from inside the container, the container forming the lower part of the support structure of the wind turbine. This method is equivalent to a telescopic installation of the wind turbine, in which the tower is moved longitudinally to gain height. However, the costs are high, as a container sufficiently large and being able to support the loads of the installed offshore wind turbine is needed. Additionally, the connection points between the container and the actual tower of the wind turbine are critical points prone to get damaged at load peaks due to the differing diameter between both parts.

The methods and devices to install the towers of wind turbines known from the prior art are complex and require costly support structures and hoisting devices. Additionally, not all methods are suited for transporting and installing completely preassembled towers.

It is therefore an object of the invention to provide an improved concept for installing wind turbine towers.

This is achieved by an installation system according to claim 1, a tower of a wind turbine according to claim 12, a method of upending a tower according to claim 14 and a method of installing a tower according to claim 15.

An installation system for installing a tower of a wind turbine according to the invention comprises an upending device for rotating the tower about a primary axis of rotation, and a yoke configured to be lifted by a crane.

An advantage of having an installation system comprising a plurality of components is the modular functionality of the single components. On the one side, the modularity of the installation system allows for easier coupling and decoupling of the single components of the installation system, and, therefore, the installation system can be easily removed from the tower once the installation is completed. The components can be reused for the installation of further towers. On the other side, the modular design allows for an easier adjustment of the components of the installation system to different wind turbine tower models, i.e. for towers with differing diameters. Hence, it is not necessary to redesign the complete installation system when used with another tower diameter.

The installation system is suited for the upending of the tower at the installation site. For the upending of the tower, the upending device of the installation system shifts the tower on the ground while the yoke of the installation system is pulled by a crane vertically. Thus, the first tower end is shifted on the ground and simultaneously, the second tower end is lifted, resulting in a rotational movement of the tower from a horizontal position to a vertical position.

According to the invention, the upending device is coupled to a first tower end of the tower. The coupling of the upending device to the first tower end can be done by a releasable connection.

Under releasable connection is to be understood a connection between components which can be released without damage of the single components. This connection can be achieved by a semi-permanent joining method. For example, a bolt, screw, pin, rivet, thread, stud or other longitudinal piece can be used as the fastener of the components.

Alternatively, other connections can be used as releasable joining methods, such as a shape fit, a friction connection or a press fit. For example, a component pressing both the first tower end and the upending device can be used as the releasable connection.

A releasable connection is particularly advantageous, as after the upending process the upending device can be released from the tower, as the upending device is not needed for the installation and the operation of the wind turbine. A further advantage of this connection is that the upending device is not damaged after the release, so that the upending device can be used for the upending of further towers.

According to the invention, the yoke is coupled to a second tower end of the tower. The coupling of the yoke to the second tower end can be done by a releasable connection.

A releasable connection is particularly advantageous, as after the installation process the yoke can be released from the tower, as the yoke is not needed for the operation of the wind turbine. A further advantage of this connection is that the yoke is not damaged after the release, so that the yoke can be used for other towers.

According to a preferred embodiment of the invention, the upending device comprises a stationary element and a rotating element. The stationary element is a component of the upending device which does not rotate during the upending of the tower at the installation site. Thus, the meaning of "stationary" in the context of the stationary element of the upending device is to be understood as an element which does not rotate, but which can be shifted.

According to another preferred embodiment of the invention, the rotating element rotates about a primary axis of rotation by means of a primary axis bearing. Advantageously, two primary axis bearings are placed at each side of the upending device to couple the stationary element and the rotating element together. This is advantageous for a stable upending, as the tower weight is distributed over both primary axis bearings. By means of this primary axis bearing, the rotating element can rotate relatively to the stationary element.

According to another preferred embodiment of the invention, the upending device comprises a secondary axis bearing which allows the tower to rotate about a secondary axis of rotation. This secondary axis bearing can be placed at the center of the rotating element of the upending device. This is advantageous for offshore wind turbine upending, as the secondary axis bearing allows the tower to rotate sideways about a secondary axis of rotation during upending to account for vessel movements. The secondary axis of rotation is perpendicular to the ground's surface when the tower is in a horizontal position fixed to the upending device and parallel to the ground's surface when the tower is in a vertical position.

According to another preferred embodiment of the invention, the upending device comprises wheels for shifting the upending device during the upending of the tower. For this, wheels can be fixed to the stationary element of the upending device. Due to the wheels, the upending device can shift on the ground's surface during the upending of the tower so that the first tower end can roll towards the starting position of the yoke during upending. Additionally, the wheels contribute to a load distribution of the tower's weight during upending.

According to another preferred embodiment of the invention, the wheels are configured to roll on the rails of the vessel. This allows for more stability during shifting. Additionally, the wheels can be fixed to the rails so that they do not detach from the rails, for example when the tower is transported on the sea.

Alternatively, the upending device can be mounted on a Self-propelled modular transporter (SPMT). SPMTs are low-profile deck, multi-axle, self-propelled transporters, with independent suspension axle assemblies that are typically used to carry heavy loads. An SPMT can be electric powered and have six to twelve or more on-center rotation axle assemblies. The axles can be independently steered by varying each wheel motor speed and direction. The high mobility provided by SPMTs is particularly useful during the upending of the wind turbine if a high accuracy is needed.

Alternatively, the upending device can be fixed to a position of the vessel for offshore wind turbine upending and the vessel or a surface on the deck of the vessel can shift so that the yoke shifts vertically while the upending device shifts horizontally.

Alternatively, the upending device can be fixed to a position and does not shift, so that the yoke follows a circular movement being pulled by the crane while the upending device rotates. The second tower end shifts then from the ground position to a position over the upending device.

According to another preferred embodiment of the invention, the upending device comprises an upending arm configured to support the rotation of the upending device about the primary axis of rotation. The upending arm is fixed at the stationary element of the upending device and pushes against the rotating element of the upending device to rotate the rotating element of the upending device about the primary axis of rotation.

Hence, the upending process can be supported by the upending arm. The upending arm can assist the rotation of the rotating element about the primary axis of rotation by pushing against this rotating element and might impede the rotating element from rotating back to the original position, which is advantageous for the assistance of the rotation.

According to a preferred embodiment of the invention, the upending device is releasably connected to the first tower end by a clamping system. The clamping system comprises clamps used to couple the tower to the rotating element of the upending device. The clamping system is a quick way to releasably connect and disconnect the tower to the upending device, which is advantageous during the upending and installation process of the tower, as the operation time is very costly.

The clamping system can be operated hydraulically, i.e. by a piston, electrically or mechanically. The clamping means may be remote controlled or by wire or cable.

According to another preferred embodiment of the invention, the yoke is coupled to the second tower end by means of a coupler unit. The coupler unit couples the yoke to the second tower end of the tower. An advantage of using a coupler unit is that the yoke can be more easily fastened to the second tower end.

According to another preferred embodiment, the coupler unit is an integral part of the yoke, which means that the yoke and the coupler unit are formed as a single body. An integral connection can be achieved with permanent joining methods such as welding, which permanently join the surfaces of individual components together to create a single component which cannot be separated into the original individual components without considerable damage. An integral connection can also be achieved during the production of the yoke. In this case, the casting mold comprises both the shape of the yoke as well as the shape of the coupler unit. Thus, the casting of the yoke produced already comprises the coupler unit.

According to another preferred embodiment, the coupler unit is a separate part of the yoke. In this case, the coupler unit is releasably connected to the yoke by a semi-permanent joining method, such as bolts, rivets, screws or other known joining methods. For example, the yoke can be coupled to the coupler unit by a nut-bolt connection.

According to another preferred embodiment of the invention, the coupler unit is releasably connected to the second tower end by fasteners. For this, the fasteners are inserted in both a first fastening hole of the second tower end and a second fastening hole of the coupler unit to fasten the coupler unit to the second tower end.

Preferably, pins are used to connect the coupler unit to the second tower end. By using pins, the coupler unit can be easily detached during the installation of the tower at the installation site.

A major advantage of a releasable connection is that the installation system can be completely detached of the tower after the installation. Hence, the same installation system can be used to install multiple towers, as the installation system components are neither damaged by the coupling with the tower nor used during the operation of the wind turbine, so they can be detached from the wind turbine after installation.

Alternatively, the yoke is directly releasably connected to the second tower end by fasteners. For this, the fasteners are inserted in both a first fastening hole of the second tower end and an eighth fastening hole of the yoke to fasten the yoke to the second tower end.

The tower ends have usually fastening holes for mounting the tower on the foundation, monopile or transition piece or for attaching the nacelle to the tower. Hence, these fastening holes can be further used as the first fastening holes to fasten the coupler unit to the tower end or to fasten the yoke to the tower end.

Alternatively, if the fastening holes of the tower end are not suited to fasten the coupler units or the yoke, the first fastening holes can be directly drilled at the tower end. Alternatively, the coupler unit or the yoke can be attached to the tower end by other releasable joining methods, such as a shape fit or a friction connection.

According to another preferred embodiment of the invention, the coupler unit comprises a bracket. The use of brackets is a cost-effective solution with which the yoke can be easily coupled to the tower end.

According to another preferred embodiment of the invention, the coupler unit comprises a plurality of brackets distributed along the circumference of the tower end. This is advantageous for heavy towers, as the load to be supported by the coupler unit can be distributed on the plurality of brackets. It also makes it easier to attach the yoke using the brackets, as the yoke can be attached to multiple points of the tower end. The load is also better distributed on the yoke by a plurality of brackets.

The use of brackets is a simple and cost-effective way to combine further components to the tower end, such as the yoke. By using a plurality of brackets distributed along the circumference of the tower end, the same yoke can be used for different towers with varying diameters at the tower ends. Thus, production costs are reduced by using the same yokes for different wind turbine models, as only the brackets are to be adapted to the different diameters of the tower ends. Alternatively, by attaching the brackets at different positions depending on the diameter of the tower end, the same brackets could be used for different wind turbine models.

Additionally, by using brackets, further components can be attached to the coupler unit, such as the transport system used for the transport of the tower.

According to another preferred embodiment of the invention, the bracket comprises a bracket tongue for coupling the bracket to the yoke by fasteners. For this, the fasteners are inserted in both a third fastening hole of the bracket tongue of the coupler unit and an eighth fastening hole of the yoke to fasten the yoke to the coupler unit. The fasteners allow for a releasable connection of the brackets with the yoke, with the above-mentioned advantages.

According to another preferred embodiment of the invention, the yoke comprises a yoke tongue for coupling the yoke to the brackets by fasteners. For this, the fasteners are inserted in both a third fastening hole of the bracket tongue of the coupler unit and an eighth fastening hole of the yoke tongue of the yoke to fasten the yoke to the coupler unit. The fasteners allow for a releasable connection of the brackets with the yoke, with the above-mentioned advantages.

According to another preferred embodiment of the invention, the yoke comprises a lifting trunnion. The lifting trunnion allows for the balance of the weight and for the rotation of the yoke. The rotation of the yoke with the lifting trunnion allows for the alignment of the yoke tongues with the bracket tongues to fasten both components together. Additionally, through the lifting trunnion, the yoke rotates to allow for the vertical movement through a rotation of the second tower end by ninety degrees.

According to a preferred embodiment, a damper is placed between the hook and the crane. The damper damps the movement of the tower while the tower is being lifted and shifted from the vessel to the monopile, foundation or transition piece.

According to a preferred embodiment, a heave compensator is placed between the hook and the crane. The heave compensator avoids large dynamic actions in the equipment due to vessel movements and ensures a quick lift without re-hit when the tower is lifted.

Yet another aspect of the present invention relates to a tower of a wind turbine comprising an installation system. The installation system comprises an upending device for rotating the tower about a primary axis of rotation, and a yoke configured to be lifted by a crane. The upending device is coupled to a first tower end of the tower. The coupling of the upending device to the first tower end is done by a releasable connection.

According to a preferred embodiment of the invention, the tower is lifted only by one crane and not by two or a plurality of cranes. The simultaneous use of an upending device and a yoke makes this possible. The crane lifts one tower end by the joke and the other tower end follows the movement of the lifting through the upending device in which the upending device shifts on the ground horizontally.

According to a preferred embodiment of the invention, the tower is lifted by the crane only on one tower end in which a hook of the crane is coupled to only one tower end. The simultaneous use of an upending device and a yoke makes this possible.

According to a preferred embodiment of the invention, the tower comprising an installation system further comprises a transport system coupled to the first tower end and a transport system coupled to the second tower end. Each transport system coupled to the tower ends comprises a frame coupled to the tower end, a wing coupled to the frame, and a lifting unit configured to lift the tower. The weight can be more equally balanced and the rigidity of the transport increased if one transport system is coupled to each end of the tower.

The modular design of the installation system allows the coupling of both the transport system and the installation device at each tower end. This simplifies the transport and installation, as both the transport system and the installation system or at least some parts of the installation system, such as the yoke, can be coupled before tower transport to both transport and later install the tower. This decreases the installation time at the installation site and reduces the time the vessels are needed for the case of offshore wind turbines.

Additionally, the modular design of both the transport system and the installation system allows for some parts of the transport system to be demounted if they are not needed. For example, the wings and the lifting unit can be removed from the transport system on the vessel when the transportation of the tower to the vessel is completed, as the tower is then secured to the upending unit and no further transportation by means of the transport system is needed. This is particularly advantageous, as the protruding wings take a considerable amount of axial space. By removing the wings on the vessel before transporting them at the sea to the offshore installation site, more towers can be transported by the vessel with the gained axial space. Thus, the costs of vessel operation decrease as less trips are needed to the installation site.

Another aspect of the invention relates to a method of upending a tower of a wind turbine, wherein the tower comprises an installation system. The method comprises the steps of simultaneously lifting the yoke of the second tower end by means of a crane, so that the second tower end shifts vertically, shifting the first tower end horizontally, rotating the second tower end by ninety degrees, and rotating the first tower end by ninety degrees.

The yoke and the crane support the vertical shift of the second tower end, in which the yoke, which is rotably attached to the second tower end, is lifted by the crane. The rotation of the second tower end is achieved through the lifting trunnion of the yoke and the yoke rotates to allow for the vertical movement through a rotation of the second tower end by ninety degrees.

The upending device supports the horizontal shift of the first tower end, in which the stationary element of the upending device rolls on rails or is shifted on the deck. The upending device supports the rotation of the first tower end, in which the rotating element of the upending device rotates the first tower end through the force originated by the lifting of the yoke by the crane.

Another aspect of the invention relates to a method of installing a tower of a wind turbine. The method comprises the steps of attaching the yoke to the second tower end, attaching the upending device to the first tower end, upending the tower, detaching the upending device from the first tower end, shifting the tower to the desired installation spot, and detaching the yoke from the second tower end. When the tower is installed on the installation spot, i.e. on the monopile, foundation or transition piece, the yoke is brought back to the transport vessel, as it may be used for the installation of further towers.

In order to facilitate the understanding of the characteristics of the invention and being an integral part of this specification, some drawing sheets are attached on which figures, with an illustrative but not limiting character, the following is represented:
Figures 1 and 2 show the coupling of a yoke to a tower end according to an embodiment of the invention.
Figures 3 and 4 show the coupling of a transport system and of a yoke to a tower end according to another first embodiment of the invention.
Figure 5 shows the transport of the tower using a transport system attached at each tower end.
Figures 6 to 8 show the coupling of the upending device to the tower.
Figure 9 shows the disassembly of some transport system parts not needed for upending.
Figures 10 to 14 show the upending and the installation of the tower on the monopile, foundation or transition piece.

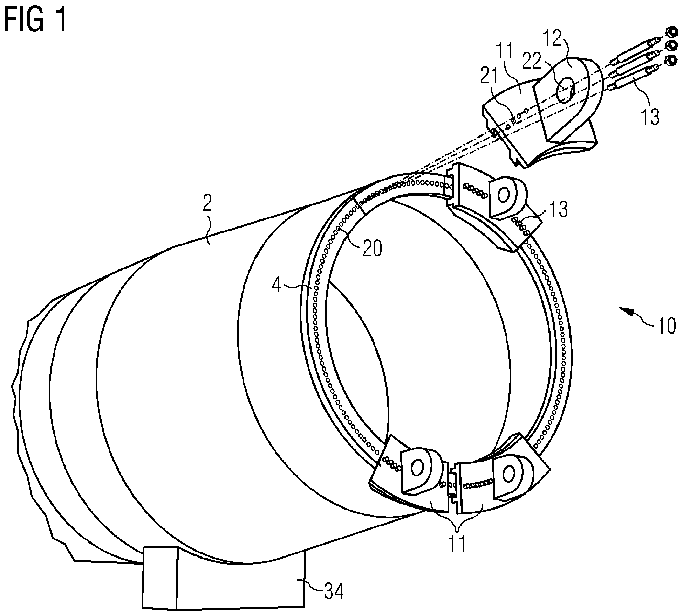

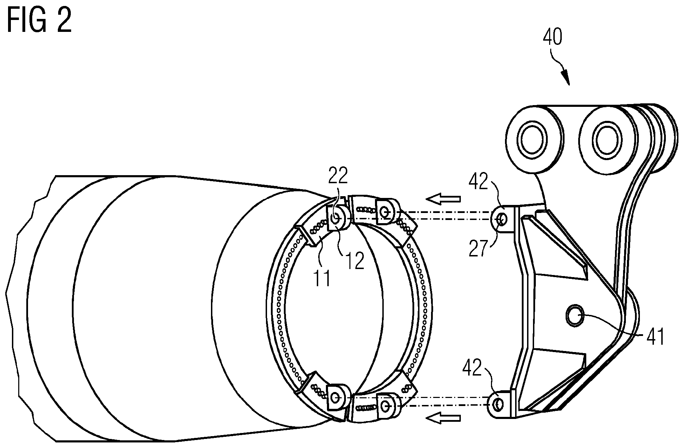

Figures 1 and 2 show the coupling of a yoke 40 to a second tower end 4 of a tower 2 of a wind turbine. According to the embodiment shown here, the second tower end 4 does not comprise a transport system 1. This could be a simple setup for towers 2 being transported by means other than the transport system 1.

Figure 1 shows the coupling of the coupler unit 10 to the second tower end 4. The second tower end 4 comprises a plurality of first fastening holes 20, which could be the fastening holes used to attach the tower to the monopile, foundation or transition piece or to attach the nacelle to the tower. The first fastening holes 20 are used to couple the coupler unit 10 to the second tower end 4. For this, fasteners 13 are inserted in both the first fastening holes 20 of the second tower end 4 and second fastening holes 21 of the coupler unit 10.

In this embodiment shown, the coupler unit 10 comprises four brackets 11, each of the brackets comprising a plurality of second fastening holes 21 which are fastened by fasteners 13. The fasteners 13 in this example are bolts, which can be screwed to an inner thread of the first fastening holes 20 and are then fastened with a nut. However, other fastening means can be used.

By using releasable fasteners 13 such as a nut-bolt connection, the brackets 11 and, thus, the complete transport system 1 can be releasably connected to the tower 2. This releasable connection has the advantage that the transport system 1 can be removed during the installation step of the wind turbine, as the transport system 1 is not needed during operation of the wind turbine.

Each bracket 11 of the coupler unit 10 further comprises a bracket tongue 12 configured to be coupled to the yoke 40. For this, the bracket tongue 12 has third fastening holes 22 configured to be fastened by fasteners 13. Depending on the size and weight to be supported by the yoke 40, the bracket tongues 12 of a coupler unit 10 can have different sizes. Alternatively, each bracket 11 can comprise more than one bracket tongue 12. Alternatively, each bracket 11 can comprise a plurality of third fastening holes 22.

In Figure 2, the yoke 40 is coupled to the second tower end 4 of the tower 2 by fastening the yoke 40 to the coupler unit 10, the coupler unit 10 being already fastened to the second tower end 4. For this, the yoke 40 comprises a plurality of yoke tongues 42, each yoke tongue 42 corresponding to a bracket tongue 12. Each yoke tongue 42 comprises an eighth fastening hole 27 corresponding to the third fastening holes 22 of the bracket tongues 12 of the coupler unit 10. Fasteners 13 are inserted in both the eighth fastening holes 27 of the yoke tongues 42 and the third fastening holes 22 of the brackets 11 to couple the yoke 40 to each bracket 11 and, thus, to couple the yoke 40 to the second tower end 4 of the tower 2.

The yoke 40 comprises further a lifting trunnion 41 for the balance of the weight and for the rotation of the yoke 40. The rotation of the yoke 40 with the lifting trunnion 41 allows for the alignment of the yoke tongues 42 with the bracket tongues 12 to fasten both components together.

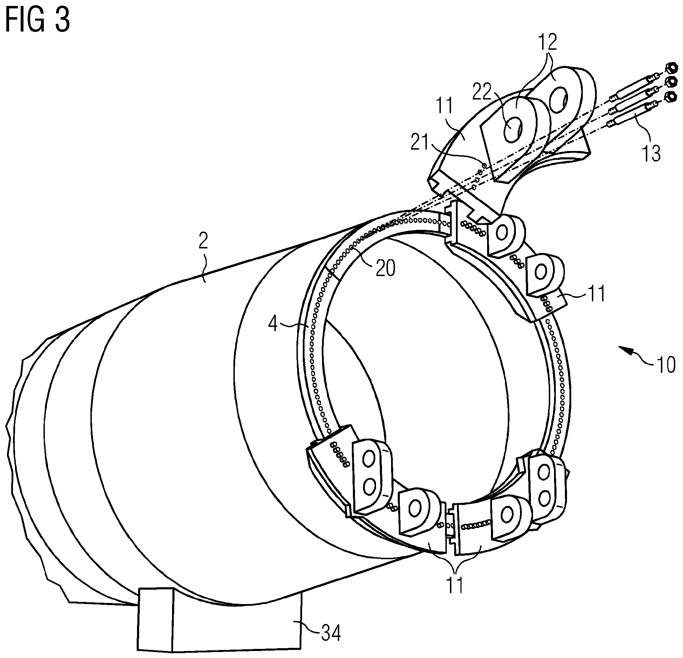

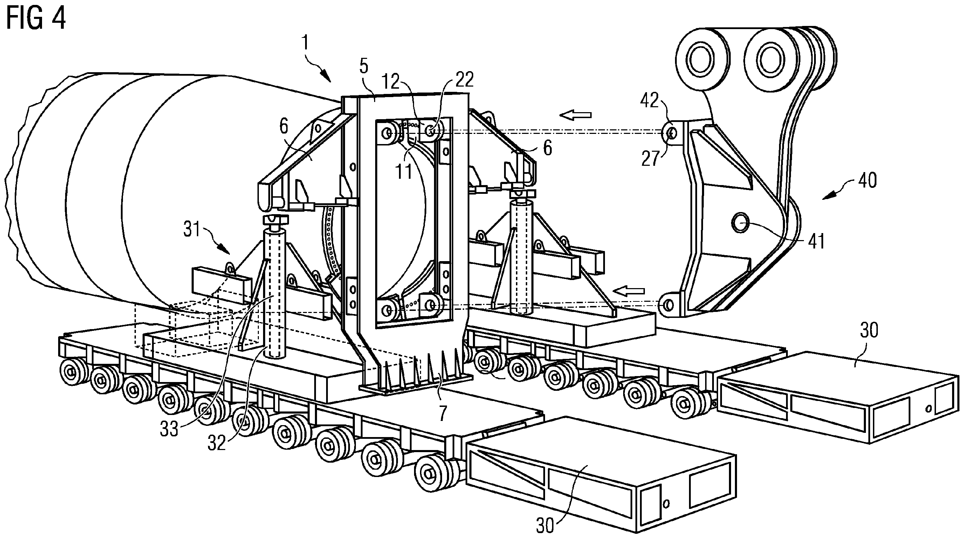

Figures 3 and 4 show the coupling of both a transport system 1 and a yoke 40 to the second tower end 4 of the tower 2 of a wind turbine. The transport system 1 shown in these figures comprises a coupler unit 10, a frame 5 being coupled through the coupler unit 10 to the second tower end 4 and two wings 6 attached to the frame 5. During the attachment of the transport system 1, the tower 2 stands on a support 34 to avoid direct contact of the tower 2 with the ground, thus preventing a possible damage of the tower 2 during the installation and simplifying the attachment of the transport system 1. When the frame 5 is installed, its base 7 can serve as a tower-support and the support 34 can be removed.

Figure 3 shows the attachment of the coupler unit 10 to the second tower end 4. The second tower end 4 comprises a plurality of first fastening holes 20, which could be the fastening holes used to attach the tower to the monopile, foundation 60 or transition piece or to attach the nacelle to the tower. The first fastening holes 20 are used to couple the coupler unit 10 to the second tower end 4. For this, fasteners 13 are inserted in both the first fastening holes 20 of the second tower end 4 and second fastening holes 21 of the coupler unit 10.

In this embodiment shown, the coupler unit 10 comprises four brackets 11 distributed along the circumference of the second tower end 4, each of the brackets comprising a plurality of second fastening holes 21 which are fastened by fasteners 13. The fasteners 13 in this example are bolts, which can be screwed to an inner thread of the first fastening holes 20 and are then fastened with a nut. However, other fastening means can be used. These fasteners 13 are releasable, thus the transport system 1 is releasably connected to the tower 2 and can be removed from the tower 2 after the transportation and installation of the wind turbine.

Each bracket 11 of the coupler unit 10 further comprises two bracket tongues 12. The outer bracket tongue 12 of each bracket 11 is configured to be coupled to the frame 5, as seen in Figure 4. The inner bracket tongue 12 of each bracket 11 is configured to be coupled to a yoke 40, which is used for the upending of the tower 2. Due to the modular design of the transport system 1, the transport system 1 can be used for further purposes, such as the upending of the tower.

To attach the frame 5 to the bracket 11, the bracket tongue 12 has third fastening holes 22 configured to be fastened by fasteners 13. Depending on the size and weight to be supported by the transport system 1, the bracket tongues 12 of a coupler unit 10 can have different sizes. Alternatively, each bracket 11 can comprise a plurality of third fastening holes 22.

In Figure 4, the frame 5 is attached to the second tower end 4 of the tower 2 by fastening the frame 5 to the coupler unit 10, the coupler unit 10 being already fastened to the second tower end 4. Once the frame 5 is attached to the second tower end 4, the tower 2 can be supported by the frame 5. For this, the frame 5 in this embodiment of the transport system 1 has a base 7 which is formed as a separate part of the frame 5, which means that the frame 5 and the base 7 are separate pieces connected by a releasable joining method, such as a pin, a screw, a shape fit or a friction connection. This is particularly useful during upending of the tower 2, i.e. during the installation of the tower 2, where the base 7 can be attached to the ground and the frame 5 can be lifted from the ground by detaching itself from the base 7, when the frame 5 is pulled up by a crane 45. Additionally, two wings 6 are coupled to the frame 5 at each side of the frame 5, perpendicular to the longitudinal axis of the tower 2.

The yoke 40 is coupled to the inner bracket tongues 12 of the coupler unit 10 of the transport system 1. For this, the yoke 40 has yoke tongues 42 with eighth fastening holes 27 configured to be attached to the third fastening holes 22 of the bracket tongues 12 by means of fasteners 13. The yoke 40 comprises further a lifting trunnion 41 for the balance of the weight and for the rotation of the yoke 40.

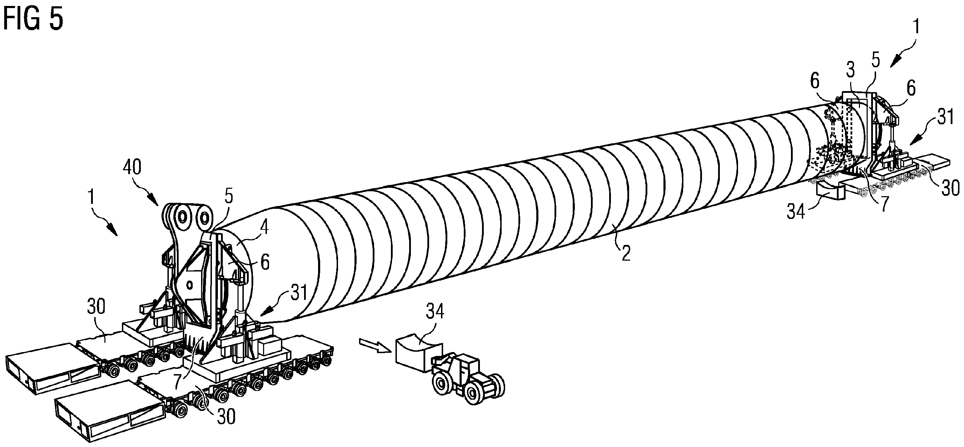

Figure 5 shows the lifting of the tower 2 using a transport system 1 coupled to the first tower end 3 and a transport system 1 coupled to the second tower end 4. At the first tower end 3, the transport system 1 is configured with a coupler unit 10, a frame 5 with an integral base 7 and two side wings 6. At the second tower end 4, the transport system 1 is configured with a coupler unit 10, a frame 5 with a detachable base 7 as a separate part of the frame 5, two side wings 6 and a yoke 40. This configuration is advantageous for upending the tower 2, where an upending device 50 is attached to the first tower end 3 for rotating the tower 2 while the crane 45 lifts the yoke 40 attached to the second tower end 4.

For each wing 6 of each transport system 1, a separate lifting unit 31 is placed under the wing 6 and a separate lifting unit arm 33 of each lifting unit 31 extends and pushes the wing 6 upwards to lift the tower 2. In this case, each transport system 1 has two wings 6, so there are four wings 6 in total. Thus, there are also four lifting units 31, placed on four trailers 30. When the tower 2 is lifted, the supports 34 can be removed, as the tower 2 is supported by the lifting units 31 on the trailers 30. The trailers 30 are configured as SPMTs.

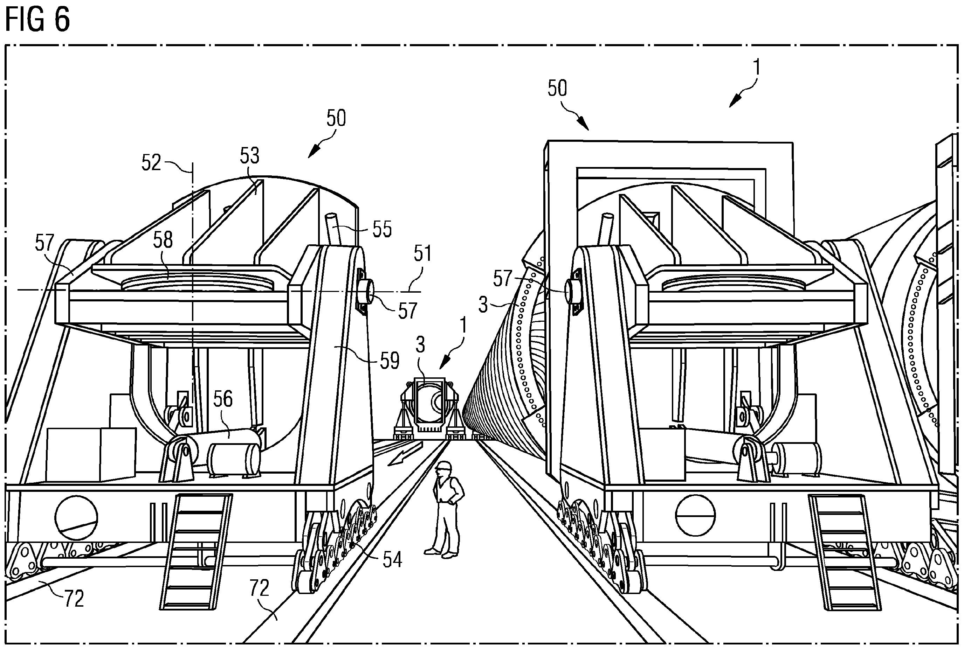

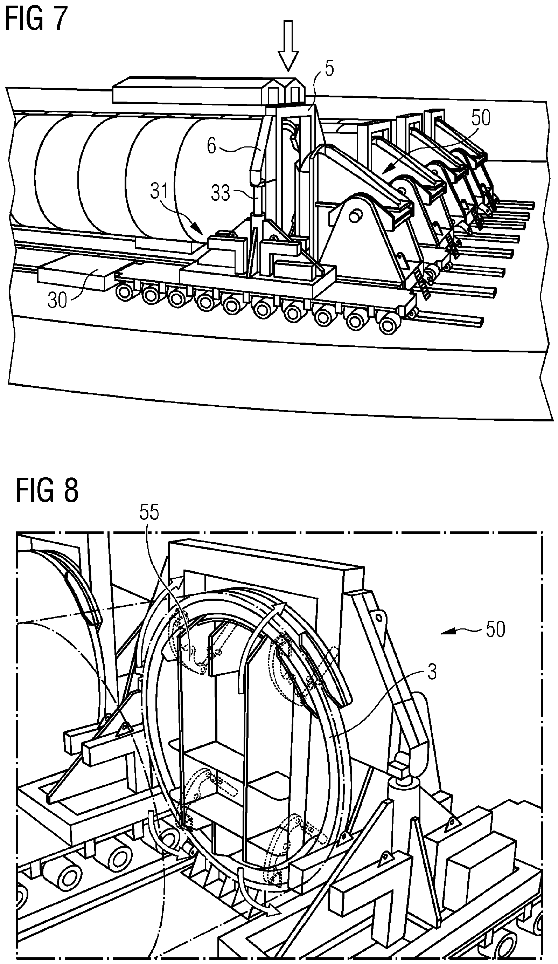

Figure 6 shows the engagement of the upending device 50 at the first tower end 3 of the tower 2. In this figure, the tower 2 on the left side is being engaged to the upending device 50, whereas the towers 2 on the right are already engaged to the upending device 50. The tower 2 is transported at both tower ends 3, 4 by a transport system 1 as shown in Figure 8, wherein the transport system 1 coupled to the first tower end 3 approaches the upending device 50 to couple the first tower end 3 to the upending device 50. For this, the transport system 1 is coupled to the rotating element 53 of the upending device 50. The engagement takes place on the vessel 71, as in this case the upending device 50 relates to an offshore wind turbine. However, the same method could be used for onshore wind turbines for the upending of the tower 2.

The upending device 50 can be shifted on wheels 54 built on rails 72 on the deck of the vessel 71. The wheels 54 contribute to a load distribution of the tower's weight during upending and allow the upending device 50 to roll towards the starting position of the yoke 40 during upending. The wheels 54 are fixed to a stationary element 59 of the upending device 50, the stationary element 59 being a component of the upending device 50 which does not rotate during the upending of the tower 2 at the installation site. The rails 72 can also be used to fix and secure other components, such as the transport system 1.

The upending device 50 comprises two primary axis bearings 57, one at each side of the upending device 50. The primary axis bearings 57 allow the rotating element 53 of the upending device 50 and the tower 2 fixed to this rotating element 53 to rotate about a primary axis of rotation 51, which is the axis of rotation parallel to the decks surface and perpendicular to the longitudinal axis of the tower 2. This allows for the upending of the tower 2, i.e. to rotate the tower 2 form a horizontal position to a vertical position. The upending is done directly on the vessel 71.

The upending device 50 further comprises a secondary axis bearing 58 at the center of the rotating element 53 of the upending device 50. The secondary axis bearing 58 allows the tower 2 to rotate sideways about a secondary axis of rotation 52 during upending to account for vessel 71 movements. The secondary axis of rotation 52 is perpendicular to the decks surface when the tower 2 is in a horizontal position fixed to the upending device 50 and parallel to the decks surface when the tower 2 is in a vertical position, as seen in Figure 15.

The upending device 50 further comprises a clamping system 55 with clamps used to couple the tower 2 to the rotating element 53 of the upending device 50. The clamping system 55 is a quick way to releasably connect and disconnect the tower 2 to the upending device 50.

The upending device 50 further comprises an upending arm 56 which is fixed at the stationary element 59 of the upending device 50 and pushes against the rotating element 53 of the upending device 50 to rotate the rotating element 53 of the upending device 50 about the primary axis of rotation 51.

Figures 7 and 8 show the engagement of the upending device 50 at the first tower end 3 of the tower 2. In Figure 7, the tower 2 is lowered from a lifted position during transport to an engaging position. For this, the lifting unit 31 has lifting unit arm 33 which can lower the tower 2. In Figure 8, the clamping system 55 is being engaged so that the first tower end 3 is coupled to the rotating element 53. For this, the clamping system 55 comprises a plurality of clamps, which extend inside the first tower end 3 and press the flange of the first tower end 3 from the inside towards the rotating element 53, which couples the tower 2 to the upending device 50.

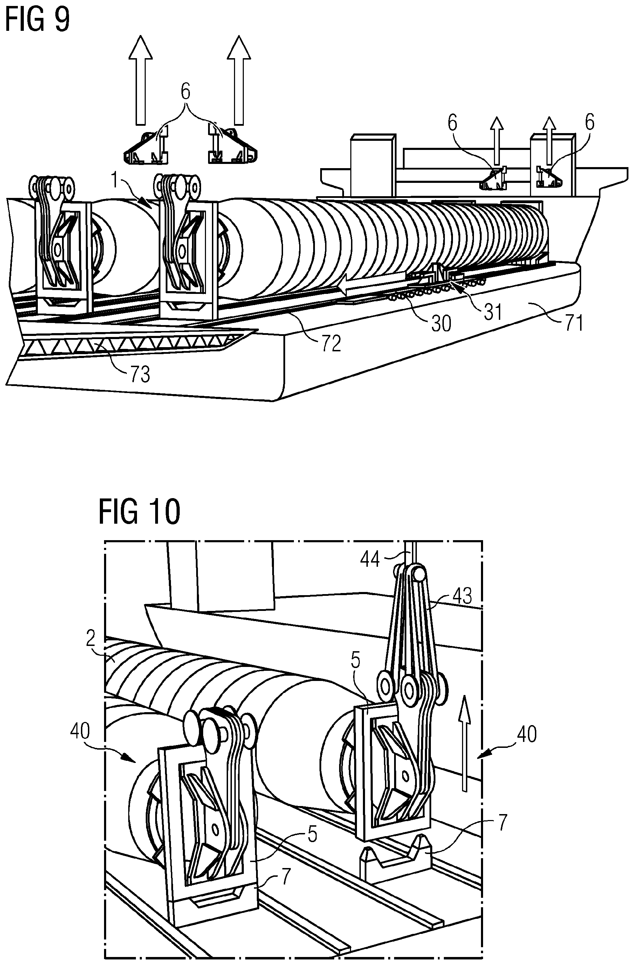

Figure 9 shows a tower 2 where the transport to the vessel 71 is completed, hence the tower 2 is secured on the vessel 71. The tower 2 can be secured by securing the base 7 of the transport system 1 to rails 72 in the vessel 71. For this, the width of the frame 5 is chosen to fit between rails 72 on the deck of a vessel 71 for securing the tower 2 during sea transport. When the tower 2 is secured, the wings 6 and the trailers 30 with the lifting units 31 can be removed to gain storage space on the vessel 71 and to be reused for the transport of further towers 2.

Figures 10 to 14 show the upending and the installation of the tower on the monopile, foundation 60 or transition piece.

Figure 10 shows the first step of the upending process. The yoke 40, which is attached to the second tower end 4, is lifted by means of a crane 45. For this, a belt 43 is fastened to the yoke 40, which is pulled up by a hook 44 of the crane 45.

The frame 5 of the transport system 1 the yoke 40 is attached to has a base 7 which is formed as a separate part of the frame 5, which means that the frame 5 and the base 7 are separate pieces connected by a releasable joining method, such as a pin, a screw, a shape fit or a friction connection. This is particularly useful, as the base 7 can be secured at the rails 72 of the vessel 71 and it is not necessary to detach the base 7 during the upending process. Through this base 7, the frame 5 can be lifted from the ground by detaching itself from the base 7, when the frame 5 is pulled up by a crane 45.

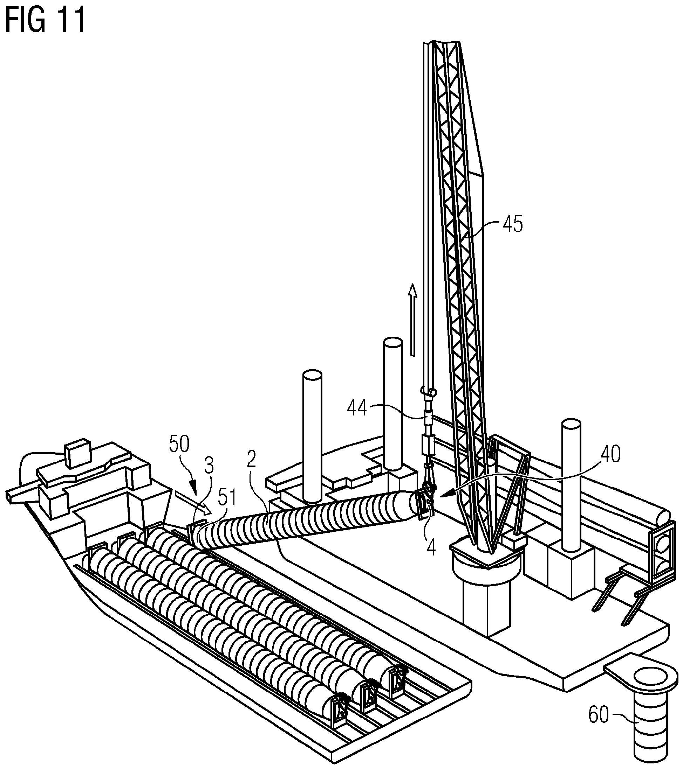

Figure 11 shows the next step of the upending process. When the second tower end 4 is detached from the ground, it is lifted vertically using the yoke 40 by the crane 45, which pulls the hook 44 attached to the belt 43 fastened to the yoke 40. Through the lifting trunnion 41, the yoke 40 rotates to allow for the vertical movement through a rotation of the second tower end by ninety degrees.

While the second tower end 4 is being pulled up by the crane 45, the first tower end 3 follows by shifting horizontally on the vessel 71 towards the starting position of the yoke 40. Thus, only a single crane 45 is needed for the upending of the tower 2, as the vertical movement of the second tower end 4 results simultaneously in a horizontal movement of the first tower end 3 until the upending process is finished. The crane 45 is attached only to the second tower end 4 of the tower 2 and not to each tower ends 3, 4.

The first tower end 3 shifts horizontally on the vessel 71 by means of the upending device 50, whose stationary element 59 rolls on the wheels 54 on the rails 72 of the deck. The rotation of the tower 2 is achieved by the rotation of the rotating element 53 about the primary axis of rotation 51. As the rotating element 53 is coupled to the first tower end 3, the horizontal shifting of the stationary element 59 and the rotation by ninety degrees of the rotating element 53 and of the first tower end 3 happen simultaneously.

After the upending process, the first tower end 3 has shifted horizontally on the deck and is rotated by ninety degrees, the second tower end 4 has shifted vertically and is rotated by ninety degrees, and the tower 2 has turned from a horizontal position to a vertical position. The upending process is achieved with a single crane 45 attached only to the second tower end 4.

Additionally, the upending process can be supported by an upending arm 56. The upending arm 56 can assist the rotation of the rotating element 53 about the primary axis of rotation 51 by pushing against this rotating element 53 and might impede the rotating element 53 to rotate back to the original position, which is advantageous for the assistance of the rotation.

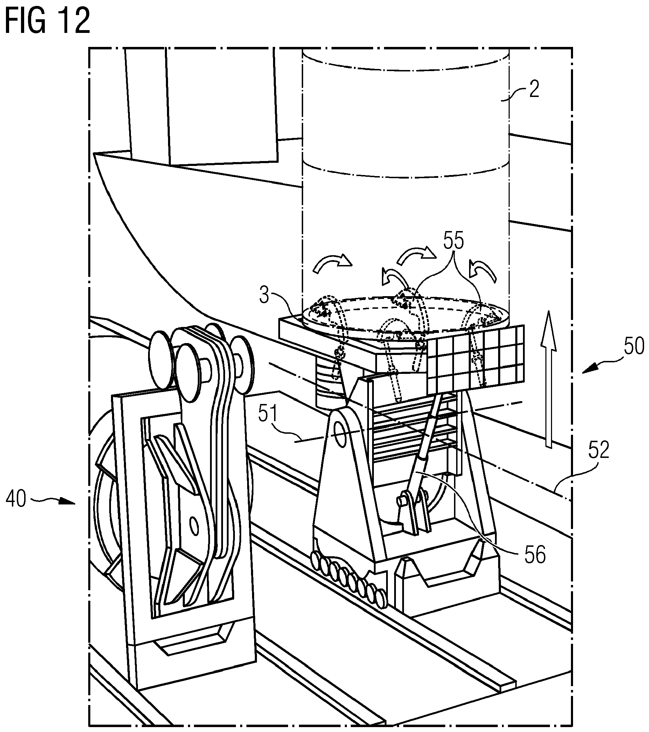

Figure 12 shows the last step of the upending process, when the clamping system 55 is released from the first tower end 3 to separate the upending device 50 from the tower 2. At this step, the transport system 1 is also released from the first tower end 3. Thus, the first tower end 3 is released from both the transport system 1 and the installation system. After this step, the installation of the tower 2 on the foundation 60 takes place. The tower 2 can be installed with the same method on a monopile or on a transition piece or on the ground.

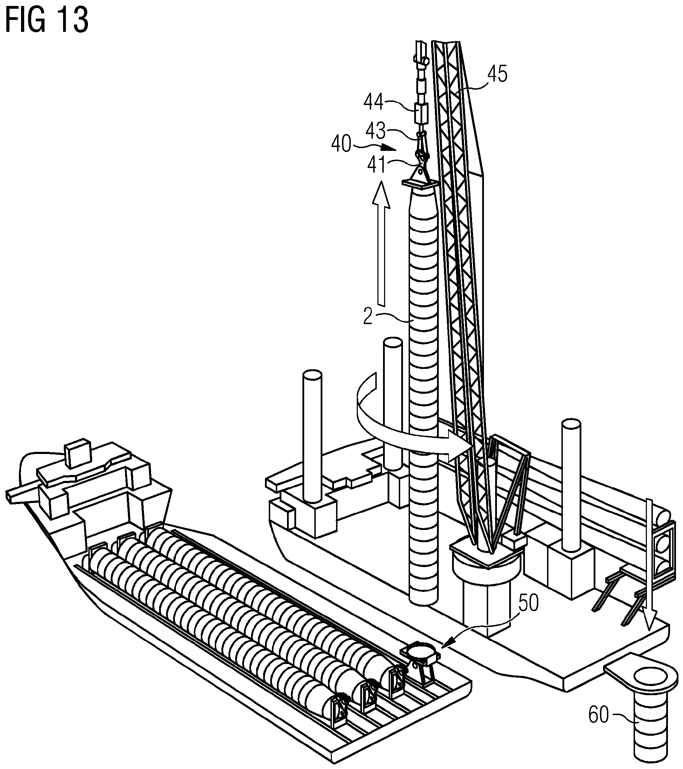

Figure 13 shows the installation of the upended vertical tower on the foundation 60. After the clamping system 55 and the transport system 1 is released from the first tower end 3, the tower 2 is lifted vertically by the crane 45, leaving the clamping system 55 and the transport system 1 on the deck of the vessel 71. The tower 2 is then shifted and placed vertically over the foundation 60 and then lowered on the foundation 60. The tower 2 can be coupled to the foundation 60 by means of the first fastening holes 20 of the first tower end 3. To damp the movement of the tower 2 while the tower is being lifted and shifted from the vessel 71 to the foundation 60 and to damp the approaching of the tower 2 on the foundation 60, the hook 44 of the crane 45 has a heave compensator 46.

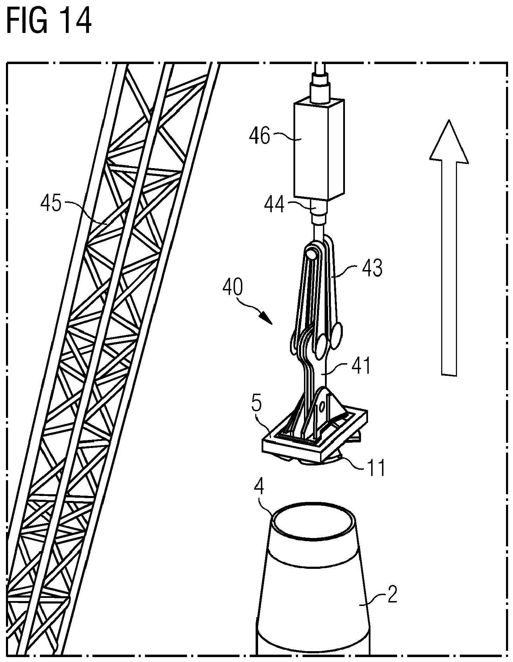

Figure 14 shows the removal of the transport system 1 and of the yoke 40 from the second tower end 4. This is done after the tower 2 is fastened to the foundation 60. As both the yoke 40 and the transport system 1 are releasably connected to the second tower end 4, the connections can be detached. For example, if these components are connected by brackets 11 of the coupler unit 10 to the second tower end 4, the brackets 11 then detached from the second tower end 4. The tower 2 then stands on the foundation 60 and the nacelle can be coupled to the second tower end 4.

### Reference list

- 1: Transport system
- 2: Tower
- 3: First tower end
- 4: Second tower end
- 5: Frame
- 6: Wing
- 7: Base
- 10: Coupler unit
- 11: Bracket
- 12: Bracket tongue
- 13: Fastener
- 20: First fastening hole
- 21: Second fastening hole
- 22: Third fastening hole
- 27: Eighth fastening hole
- 30: Trailer
- 31: Lifting unit
- 32: Lifting unit leg
- 33: Lifting unit arm
- 34: Support
- 40: Yoke
- 41: Lifting trunnion
- 42: Yoke tongue
- 43: Belt
- 44: Hook
- 45: Crane
- 46: Heave compensator
- 50: Upending device
- 51: Primary axis of rotation
- 52: Secondary axis of rotation
- 53: Rotating element
- 54: Wheels
- 55: Clamping system
- 56: Upending arm
- 57: Primary axis bearing
- 58: Secondary axis bearing
- 59: Stationary element
- 60: Foundation
- 70: Storage facility
- 71: Vessel
- 72: Rails
- 73: Ramp

## Claims

1. An installation system for installing a tower (2) of a wind turbine comprising:
- an upending device (50) for rotating the tower (2) about a primary axis of rotation (51), and
- a yoke (40) configured to be lifted by a crane (45),
**characterized in that** the upending device (50) is coupled to a first tower end (3) of the tower (2) and the yoke (40) is coupled to a second tower end (4) of the tower (2) .

2. The installation system according to claim 1, **characterized in that** the upending device (50) comprises a stationary element (59) and a rotating element (53).

3. The installation system according to claim 2, **characterized in that** the rotating element (53) rotates about a primary axis of rotation (51) by means of a primary axis bearing (57).

4. The installation system according to any of the preceding claims, **characterized in that** the upending device (50) comprises a secondary axis bearing (58) which allows the tower (2) to rotate about a secondary axis of rotation (52).

5. The installation system according to any of the preceding claims, **characterized in that** the upending device (50) comprises wheels (54) for shifting the upending device (50) during the upending of the tower (2).

6. The installation system according to any of the preceding claims, **characterized in that** the upending device (50) comprises an upending arm (56) configured to support the rotation of the upending device (50) about the primary axis of rotation (51).

7. The installation system according to any of the preceding claims, **characterized in that** the upending device (50) is releasably connected to the first tower end (3) by a clamping system (55).

8. The installation system according to any of the preceding claims, **characterized in that** the yoke (40) is coupled to the second tower end (4) by means of a coupler unit (10) .

9. The installation system according to claim 8, **characterized in that** the coupler unit (10) is releasably connected to the second tower end (4) by fasteners (13).

10. The installation system according to claim 8 or 9, **characterized in that** the coupler unit (10) comprises a bracket (11).

11. The installation system according to claim 10, **characterized in that** the bracket (11) comprises a bracket tongue (12) for coupling the bracket (11) to the yoke (40) by fasteners (13).

12. A tower (2) of a wind turbine comprising an installation system according to any of the preceding claims.

13. A tower (2) according to claim 12, **characterized in that** a transport system (1) is coupled to the first tower end (3) and a transport system (1) is coupled to the second tower end (4).

14. A method of upending a tower (2) of a wind turbine according to claim 12 or 13, comprising the steps of simultaneously:
- lifting the yoke (40) of the second tower end (4) by means of a crane (45), so that the second tower end (4) shifts vertically,
- shifting the first tower end (3) horizontally,
- rotating the second tower end (4) by ninety degrees, and
- rotating the first tower end (3) by ninety degrees.

15. A method of installing a tower (2) of a wind turbine according to claim 12 or 13, comprising the steps of:
- attaching the yoke (40) to the second tower end (4),
- attaching the upending device (50) to the first tower end (3),
- upending the tower (2) according to the method of claim 14,
- detaching the upending device (50) from the first tower end (3),
- shifting the tower (2) to the desired installation spot, and
- detaching the yoke (40) from the second tower end (4) .
